# EUROPEAN PATENT APPLICATION

(11) **EP 4 769 225 A1**
(43) Date of publication of application: **01.07.2026**
(21) Application number: 25202669.5
(22) Date of filing: 17.09.2025
(51) Int. Cl.: G06N 3/0495, G06N 3/045, G06N 3/044, G06N 3/0464, G06N 3/0475, G06N 3/0499

(54) **COMPRESSION APPARATUS AND OPERATING METHOD THEREOF**

(30) Priority: 27.12.2024 KR 20240198595
(71) Applicant: Samsung Electronics Co., Ltd, Suwon-si, Gyeonggi-do 16677 (KR)
(72) Inventor: KANG, Hyoa, 16678 Suwon-si (KR); CHOI, Hee Min, 16678 Suwon-si (KR); KIM, Suji, 16678 Suwon-si (KR)
(74) Representative: Marks & Clerk LLP

(57) **Abstract**

There is provided a compression method implemented by at least one hardware processor, including: acquiring attention data generated in a layer of a deep learning model based on an attention mechanism; converting a data format of the attention data into a converted data format, wherein a bit pattern of the attention data is maintained in converting the data format of the attention data into the converted data format; realigning, based on data characteristics of input data of the deep learning model, the attention data in the converted data format; and generating first compressed data by inputting the realigned attention data to an encoder model based on an artificial neural network.

## Description

### Background

### 1. Field

The embodiments relate to a data compression method.

### 2. Description of the Related Art

Transformer-based structures are attracting attention for their outstanding performance in the fields of natural language processing and image generation. Transformer-based structures may have strengths in learning the relationships between complex data, so they may be applied to a variety of generation models. Transformer-based generation models may generate a large amount of attention data during advanced learning and inference processes, which may be one of the major factors that may burden computational resources and memory bandwidth.

Among existing data compression techniques, lossy compression schemes may not sufficiently retain the details of attention data, which may affect the quality of image generation. For example, since image data is continuous and includes spatial information, when an existing language model-based lossy compression technology is applied as-is, issues such as degradation of the image quality of a generated image and deterioration of learning efficiency of a model may be likely to occur.

The above information is presented as related art only to assist with an understanding of the disclosure. No determination has been made, and no assertion is made, as to whether any of the above might be applicable as prior art with regard to the disclosure.

### Summary

There is provided compression method implemented by at least one hardware processor, including: acquiring attention data generated in a layer of a deep learning model based on an attention mechanism; converting a data format of the attention data into a converted data format, wherein a bit pattern of the attention data is maintained in converting the data format of the attention data into the converted data format; realigning, based on data characteristics of input data of the deep learning model, the attention data in the converted data format; and generating first compressed data by inputting the realigned attention data to an encoder model based on an artificial neural network.

Converting the data format of the attention data into the converted data format may include converting the data format of the attention data into a same format as a format predetermined as required by the encoder model.

Converting the data format of the attention data into the converted data format may include converting the data format of the attention data into any of byte units and integer data.

Realigning the attention data in the converted data format may include: determining, based on the data characteristics of the input data of the deep learning model, a compression unit of the attention data in which the data format is converted; and realigning, according to the compression unit, the attention data in the converted data format.

Realigning the attention data in the converted data format may include: in response to the input data of the deep learning model being determined as image data, realigning, based on spatial information on a relationship between pixels of the image data, the attention data in the converted data format.

Realigning the attention data in the converted data format may include: in response to the input data of the deep learning model being determined as video data, realigning, based on temporal information on a relationship between frames of the video data, the attention data in the converted data format.

The deep learning model may include a transformer model, and acquiring the attention data may include acquiring output data of any of a multi-head self-attention layer, a multi-head cross attention layer, and a feedforward network of the transformer model.

The compression method may include generating second compressed data by performing entropy encoding on the first compressed data.

The compression method may include storing the first compressed data in a memory.

There is provided a restoration method, including: acquiring compressed attention data from a memory; generating restored data by inputting the compressed attention data to a decoder model based on an artificial neural network; restoring a realignment state of the restored data based on layer characteristics of a deep learning model based on an attention mechanism; and acquiring attention data by converting a format of the restored data, in which the realignment state is restored, into a converted format in which a bit pattern of the attention data is maintained in converting the format into the converted format in which the realignment state is restored.

There is provided an electronic device including: at least one processor including processing circuitry; and a memory storing instructions, and the instructions, when executed by the at least one processor, cause the electronic device to: acquire attention data generated in a layer of a deep learning model based on an attention mechanism; convert a data format of the attention data into a converted data format, wherein a bit pattern of the attention data is maintained in converting the data format of the attention data into the converted data format; realign, based on data characteristics of input data of the deep learning model, the attention data in which the data format is converted; and generate first compressed data by inputting the realigned attention data to an encoder model based on an artificial neural network.

The instructions, when executed by the at least one processor, may cause the electronic device to: convert the data format of the attention data into a same format as a format predetermined as required by the encoder model.

Converting the data format of the attention data into the converted data format may include converting the data format of the attention data into any of byte units and integer data.

The instructions, when executed by the at least one processor, may cause the electronic device to: determine, based on the data characteristics of the input data of the deep learning model, a compression unit of the attention data in which the data format is converted; and realign, according to the compression unit, the attention data in the converted data format.

The instructions, when executed by the at least one processor, may cause the electronic device to: in response to the input data of the deep learning model being determined as image data, realign, based on spatial information on a relationship between pixels of the image data, the attention data in the converted data format.

The instructions, when executed by the at least one processor, may cause the electronic device to: in response to the input data of the deep learning model being determined as video data, realign, based on temporal information on a relationship between frames of the video data, the attention data in the converted data format.

The deep learning model may include a transformer model, and the instructions, when executed by the at least one processor, may cause the electronic device to: acquire output data of any of a multi-head self-attention layer, a multi-head cross attention layer, and a feedforward network of the transformer model.

The instructions, when executed by the at least one processor, may cause the electronic device to: generate second compressed data by performing entropy encoding on the first compressed data.

The instructions, when executed by the at least one processor, may cause the electronic device to: store the first compressed data in a memory.

The instructions, when executed by the at least one processor, may cause the electronic device to: generate restored data by inputting the first compressed data to a decoder model based on an artificial neural network; restore a realignment state of the restored data based on layer characteristics of the deep learning model; and acquire attention data by converting a format of the restored data, in which the realignment state is restored, into a converted format in which the bit pattern of the attention data is maintained in converting the format into the converted format.

### Brief description of the drawings

The above and/or other aspects will be more apparent by describing certain embodiments with reference to the accompanying drawings, in which:
FIG. 1 is a diagram illustrating a data compression and restoration system according to one or more embodiments;
FIG. 2 is a diagram illustrating a structure of a transformer model according to one or more embodiments;
FIG. 3A is a diagram illustrating a detailed structure of an encoder according to one or more embodiments;
FIG. 3B is a diagram illustrating a structure of a decoder according to one or more embodiments;
FIG. 4 is a diagram illustrating a configuration and operation process of a data compression and restoration system according to one or more embodiments;
FIG. 5 is a diagram illustrating a system configuration and data flow of a compression and restoration process of attention data according to one or more embodiments;
FIG. 6 is a diagram illustrating an example of an encoder and a decoder operating within a host according to one or more embodiments;
FIG. 7 is a diagram illustrating an example in which an encoder and a decoder are configured and used as a separate electronic device according to one or more embodiments;
FIG. 8 is a diagram illustrating an example of an encoder and a decoder operating within a memory according to one or more embodiments;
FIG. 9 is a flowchart illustrating a compression method according to one or more embodiments;
FIG. 10 is a flowchart illustrating a restoration method according to one or more embodiments;
FIG. 11 is a diagram illustrating an electronic device according to one or more embodiments; and
FIG. 12 is a diagram illustrating an electronic device according to one or more embodiments.

### Detailed description

The following structural or functional descriptions are exemplary to merely describe the embodiments, and the scope of the embodiments is not limited to the descriptions provided in the present specification. Various changes and modifications may be made thereto by those of ordinary skill in the art.

Although terms such as "first" or "second" are used to explain various components, the components are not limited to the terms. These terms should be used only to distinguish one component from another component. For example, a first component may be referred to as a second component, and similarly, the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", "directly between", "neighboring", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art to which the present disclosure pertains. Terms, such as those defined in commonly used dictionaries, should be construed to have meanings matching with contextual meanings in the relevant art and the present disclosure, and are not to be construed as an ideal or excessively formal meaning unless otherwise defined herein.

The embodiments may be implemented as various types of products such as, for example, a personal computer, a laptop computer, a tablet computer, a smartphone, a television, a smart home appliance, an intelligent vehicle, a kiosk, and a wearable device. Hereinafter, embodiments are described in detail with reference to the accompanying drawings. In the drawings, like reference numerals are used for like elements.

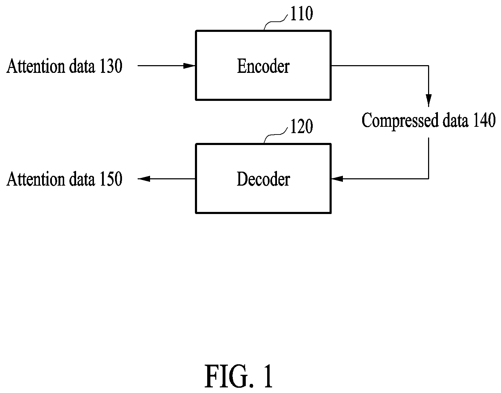

FIG. 1 is a diagram illustrating a data compression and restoration system according to one or more embodiments.

Referring to FIG. 1, a data compression and restoration system according to one or more embodiments may include an encoder 110 and a decoder 120.

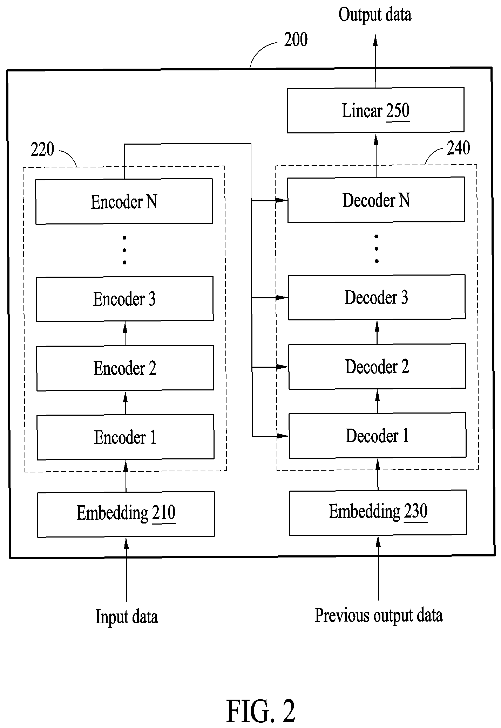

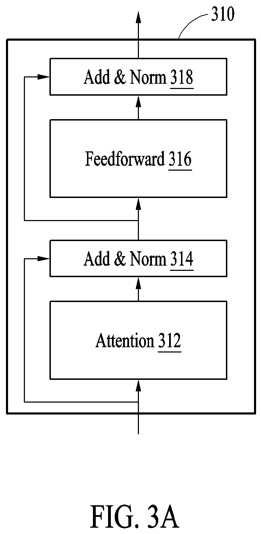

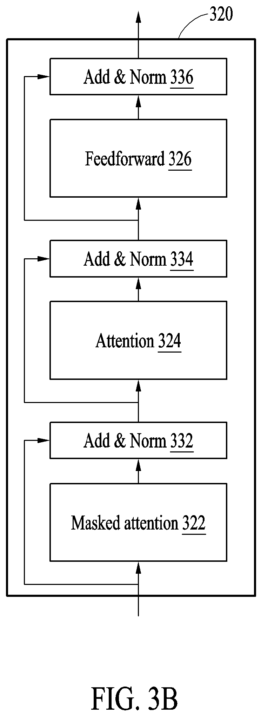

Attention data 130 and attention data 150 according to one or more embodiments may include data generated in a layer of a deep learning model based on an attention mechanism. For example, the deep learning model based the attention mechanism may include a transformer model. The attention data 130 and attention data 150 may include output values of multi-head cross attention, multi-head self-attention, or feedforward in a transformer block, and activation values to which an activation function is applied. For example, the output of the transformer block may include a result of learning an association of a particular location or element through the attention mechanism, and the attention data 130 and attention data 150 may be generated based on the learned result. The transformer model and the attention data according to one or more embodiments are described in detail below with reference to FIG. 2, FIG. 3A, and FIG. 3B.

The encoder 110 according to one or more embodiments may convert attention data 130 into compressed data 140. The encoder 110 may convert a data format of the attention data 130 without changing a bit pattern of the attention data 130 or realign the attention data 130 according to data characteristics. The bit pattern may be an arrangement structure of binary numbers used when data is stored or transmitted and may be a unique structure that represents the contents of the data in digital form.

For example, when the format of the attention data 130 is float16, the encoder 110 may convert the attention data into byte units or integer (e.g., int16) data. In this example, the converted data may be adjusted to a format suitable for an encoder model while maintaining an original bit pattern. Not changing the bit pattern of the data may indicate that an original bit arrangement is not damaged when the data is converted. Additionally, the encoder 110 may realign the attention data 130 by considering spatial or temporal overlap values of the input data including the attention data 130. The encoder 110 may be referred to as a compression module, a compression apparatus, or a compressor.

The compressed data 140 according to one or more embodiments may be attention data in a compressed form generated by the encoder 110. The compressed data 140 may be stored in a memory and restored through the decoder 120, as necessary.

The decoder 120 according to one or more embodiments may restore the compressed data 140 to generate attention data 150. The decoder 120 may operate in the opposite process of the encoder 110 and may restore the conversion and alignment applied to the compressed data 140 to its original state. For example, the decoder 120 may convert byte-unit or integer-type data into the original attention data format and restore the realigned data to its original spatial or temporal form. The decoder 120 may be referred to as a restoration module, a restoration apparatus, or a restorer.

The attention data 150 may be attention data restored by the decoder 120 and may be used in its original form in a computational process of an artificial neural network (ANN) model. The attention data 150 may be provided as input to additional operations or inference processes.

A compression and restoration system according to one or more embodiments may perform compression and restoration of data generated from a language model as well as compression and restoration of data generated from an image model. Additionally, the compression and restoration system may include lossless compression schemes as well as lossy compression schemes such as pruning and quantization that may be applied to reduce computational amount and memory usage.

The compression and restoration system according to one or more embodiments may be implemented as an autonomous driving system, an augmented reality/virtual reality (AR/VR) target chip, a laptop computer, a mobile phone, a smartphone, a tablet personal computer (PC), a mobile internet device (MID), a personal digital assistant (PDA), an enterprise digital assistant (EDA), a digital still camera, a digital video camera, a portable multimedia player (PMP), a personal navigation device or portable navigation device(PND), a handheld game console, an electronic book (e-book), or a smart device. The smart device may be implemented as a smartwatch, a smart band, or a smart ring. Additionally, the compression and restoration system may be implemented in the form of a system on chip (SoC) or integrated as an intellectual property (IP) within the SoC. However, the compression and restoration system is not limited to the above-described examples and may be applied to various other devices and implemented in various forms.

FIG. 2 is a diagram illustrating a structure of a transformer model according to one or more embodiments.

Referring to FIG. 2, a transformer model 200 according to one or more embodiments may perform inference on given input data and provide output data. The transformer model 200 may determine output data at a current timepoint based on input data and previous output data at a previous timepoint.

The transformer model 200 may include a plurality of encoders 220 and a plurality of decoders 240. However, the encoders (e.g., the encoders 220 of FIG. 2 and encoders 310 of FIG. 3A) and the decoders (e.g., the decoders 240 of FIG. 2 and decoders 320 of FIG. 3B) described below with reference to FIGS. 2 to 3B may have the same names as the encoders 110 and decoders 120 described with reference to FIG. 1, but their purposes and operating schemes may be different. The encoder 110 and the decoder 120 of FIG. 1 may operate in a data processing pipeline and may perform data compression and restoration. On the other hand, the encoders 220 and encoder 310 and decoders 240 and decoder 320 of FIG. 2, FIG. 3A, and FIG. 3B may be components that process input data and generate a final output within the transformer model 200.

The transformer model 200 may have a structure in which the encoders 220 and decoders 240, which use self-attention as a basic block, are stacked. The encoders 220 may include N (N may be a natural number greater than or equal to "2") encoders, and the decoders 240 may include N decoders. The encoders 220 and decoders 240 may each be implemented in a form in which the same layer is repeated N times.

Among the encoders 220, a first encoder (e.g., Encoder 1) may receive an embedding vector of input data derived by embedding 210, and among the decoders 240, a first decoder (e.g., Decoder 1) may receive an embedding vector of previous output data derived by embedding 230. Here, the input data and previous output data may be, for example, a particular word, sentence, image or video. However, the input data is not limited to the examples described above. A positional encoding value may be added to the embedding vector before the embedding vector is input to Encoder 1 and Decoder 1.

The encoders 220 may sequentially perform layer operations as many times as the number of the encoders 220 and transmit output values of the last encoder Encoder N to each of the decoders 240. Afterwards, the decoders 240 may also perform layer operations as many times as the number of the decoders 240, and the output values transmitted by the Encoder N may be used each time each operation is performed. An output value from the last decoder (e.g., Decoder N) may be linearly transformed by a linear 250 process, and the output data may be determined based on the linearly transformed value.

The structure of the transformer model 200 illustrated in FIG. 2 is only an example, and the structure of the transformer model used in the embodiments may vary, and the scope of the embodiments should not be interpreted as being limited by the structure of the transformer model 200.

FIG. 3A is a diagram illustrating a detailed structure of an encoder according to one or more embodiments.

Referring to FIG. 3A, the encoder 310 may correspond to any one of the encoders 220 of the transformer model 200 illustrated in FIG. 2. The encoder 310 may include an attention block 312, add & norm block 314, add & norm block 318, and a feedforward block 316. When the encoder 310 is implemented as a layer of a neural network, the encoder 310 may include a first sublayer corresponding to the attention block 312 and a second sublayer corresponding to the feedforward block 316.

The attention block 312 that determines an attention value may correspond to multi-head self-attention. The multi-head self-attention may be performing self-attention operations in parallel. The self-attention operation may be performing an attention operation on oneself, and the attention operation may be a process of obtaining an attention value. The feedforward block 316 may correspond to a general feedforward neural network. The add & norm block 314 and add & norm block 318 may perform a residual connection operation that adds inputs and outputs together and a layer normalization operation that performs normalization using the mean and variance.

The attention block 312 may determine a similarity with each key for a given query and reflect the determined similarity as a weight to each value mapped to the key. The attention block 312 may provide a weighted sum of values reflecting the similarity as an attention value. Here, the query, key, and value may be, for example, all word vectors in an input sentence. The self-attention performed by the attention block 312 calculates the similarity between words in an input sentence, so a probability that a particular word is associated with another word may be determined.

FIG. 3B is a diagram illustrating a structure of a decoder according to one or more embodiments.

Referring to FIG. 3B, the decoder 320 may correspond to any one of the decoders 240 of the transformer model 200 illustrated in FIG. 2. Similar to the encoder 310 of FIG. 3A, the decoder 320 may include blocks for performing self-attention operations and feedforward operations. The decoder 320 may include a masked attention block 322, add & norm block 332, add & norm block 334, add & norm block 336, an attention block 324, and a feedforward block 326. When the decoder 320 is implemented as a layer of a neural network, the decoder 320 may include a first sublayer corresponding to the masked attention block 322, a second sublayer corresponding to the attention block 324, and a third sublayer corresponding to the feedforward block 316.

The masked attention block 322 and the attention block 324 may determine an attention value and may correspond to multi-head attention. The multi-head attention may be performing attention operations in parallel. The masked attention block 322 and the attention block 324 may perform the same operation as the attention block 312. However, the masked attention block 322 may differ from the attention block 324 in that masking is applied to an attention score matrix. The masking may prevent future words from being referenced in the attention score matrix rather than its own word. In the attention block 324, a self-attention operation may be performed.

The feedforward block 326 may correspond to a general feedforward neural network. The add & norm block 332, add & norm block 334, and add & norm block 336 may perform a residual connection operation that adds inputs and outputs together and a layer normalization operation that performs normalization using the mean and variance.

The attention data according to one or more embodiments may include data generated from blocks making up the encoder 310 and the decoder 320 of the transformer model 200. For example, the attention data may include output data of the attention block 312, the add & norm block 314, add & norm block 318, the feedforward block 316, the masked attention block 322, add & norm block 332, add & norm block 334, add & norm block 336, the attention block 324, and the feedforward block 326.

A deep learning model based on an attention mechanism according to one or more embodiments may include, but is not limited to, a transformer model, and may also include various types of deep learning models. For example, the deep learning model based on the attention mechanism may include an attention mechanism application model based on long short-term memory (LSTM) and gated recurrent units (GRU), a convolutional neural network (CNN)-based attention model, and a sequence-to-sequence (Seq2Seq) model. Accordingly, the attention data is not limited to data generated from the transformer blocks of the transformer model 200 and may include data generated from layers of a deep learning model based on various types of attention mechanisms.

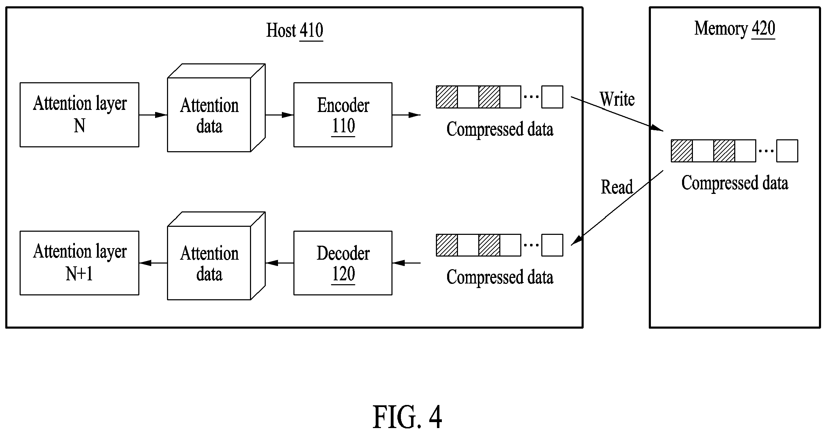

FIG. 4 is a diagram illustrating a configuration and operation process of a data compression and restoration system according to one or more embodiments. The description provided with reference to FIG. 1, FIG. 2, FIG. 3A, and FIG. 3B may also apply to the description of FIG. 4.

Referring to FIG. 4, a host 410 according to one or more embodiments may generate compressed data from attention data or restore the compressed data. A memory 420 may store the compressed data and, when necessary, read the compressed data and transmit to the host 410.

Large-scale data, such as the attention data, may be generated or processed in the host 410 and then compressed and stored in the memory 420. Thereafter, the host 410 may retrieve the stored compressed data from the memory 420 and decompress the retrieved data to use for operations.

Large-scale data, such as the attention data, may be burdensome in terms of memory bandwidth and hardware resources for direct operations. When data is compressed and stored in the memory 420, the data size may be reduced, thereby saving memory space and alleviating bottlenecks that may occur during data transmission and storage.

The memory bandwidth may be one of the major bottlenecks in deep learning models. When data is compressed and stored in the memory 420, more data may be processed with the same memory bandwidth, thereby improving the performance and efficiency of the models.

The structure that retrieves data from memory and decompresses the retrieved data to use for operations may increase efficiency when the same data is used repeatedly. When the same data is repeatedly required for a given operation, the data may not necessarily be generated each time in the host 410 by retrieving and restoring the stored compressed data from the memory 420 where the compressed data is stored. This may reduce the amount of computation in the system and save time spent on data generation and transmission.

The memory 420 may maintain data integrity and simplify synchronization tasks. By storing the compressed data in the memory 420, the same data may be referenced in all processing modules that use the same data in operations. This may simplify data management and may minimize data synchronization issues between multiple computational modules.

The host 410 according to one or more embodiments may be a data processing apparatus that processes attention data, and may use the encoder 110 to generate compressed data and the decoder 120 to restore the compressed data. The host 410 may be a component independent of the memory 420 and may control the data flow for compression and restoration operations. For example, the host 410 may be implemented as a processing unit of a central processing unit (CPU), a graphics processing unit (GPU), a neural processing unit (NPU), an artificial intelligence (AI) accelerator chip, or a server.

The memory 420 may be an independent data storage device that stores attention data in a compressed data format or provides compressed data for restoration operations. The memory 420 may be implemented in various forms such as dynamic random access memory (DRAM), static random access memory (SRAM), and non-volatile memory (NVM), and in systems requiring high-speed data access, technologies such as high bandwidth memory (HBM) may be utilized. The memory 420 may interact with the host 410 through a data transmit interface and may operate according to read and write requests for data.

The host 410 may perform operations of an Nth attention layer (e.g., Attention layer N (N may be a natural number)) and an N+1th attention layer (e.g., Attention layer N+1), and each operation may go through a data compression and restoration process through the encoder 110 and the decoder 120. Attention data generated in the Attention layer N may be converted into compressed data through the encoder 110, and the compressed data may be stored in the memory 420. Thereafter, when an operation of the Attention layer N+1 is required, the compressed data stored in the memory 420 may be restored through the decoder 120 and regenerated as attention data. The attention data restored in this manner may be used as input to the Attention layer N+1.

In FIG. 4, the relationship between the Attention layer N and the next layer, Attention layer N+1, is provided as an example, but the data compression and restoration system is not necessarily limited to the example where the compressed attention data is used as input to the next layer. For example, the compressed attention data may also be used in various operation processes performed within the same layer, such as residual operations.

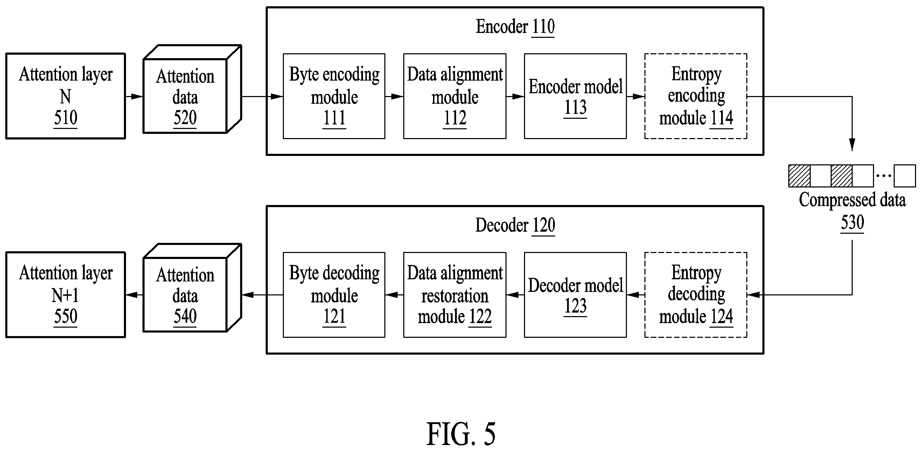

FIG. 5 is a diagram illustrating a system configuration and data flow of a compression and restoration process of attention data according to one or more embodiments. The description provided with reference to FIGS. 1 to 4 may also apply to the description of FIG. 5.

Referring to FIG. 5, attention data 520 generated in attention layer N 510 according to one or more embodiments may be converted into compressed data 530 through the encoder 110, and attention data 540 restored thereafter through the decoder 120 may be used in attention layer N+1 550.

The encoder 110 according to one or more embodiments may include a byte encoding module 111, a data alignment module 112, and an encoder model 113. According to embodiments, the encoder 110 may further include an entropy encoding module 114. However, not all the illustrated components are essential. The encoder 110 may be implemented by more components than the illustrated components, or may be implemented by fewer components.

The term "module" may be a unit including one or a combination of two or more of hardware, software, or firmware. The "module" may be used interchangeably with other terms, for example, "unit," "logic," "logical block," "component," or "circuit." The "module" may be a minimum unit of an integrally formed component or part thereof. The "module" may be a minimum unit for performing one or more functions or part thereof. The "module" may be implemented mechanically or electronically. For example, the "module" may include at least one of an application-specific integrated circuit (ASIC) chip, field-programmable gate arrays (FPGAs), or a programmable-logic device that performs known operations or operations to be developed.

The byte encoding module 111 may convert data into byte format or integer format while maintaining an original bit pattern of the attention data 520. For example, when the attention data 520 is in float16 format, the byte encoding module 111 may convert the attention data 520 into 2-byte units or into int16 format according to a format required by the encoder model 113.

More specifically, when the attention data 520 is provided in the float16 format, the float16 data may include a 1-bit sign, a 5-bit exponent, and a 10-bit mantissa. For example, when the float16 data value is "0100011011000000", the byte encoding module 111 may divide the float16 data value into the upper 8 bits and the lower 8 bits and convert them into "01000110" and "11000000", respectively. This process may be simply dividing the data into byte units, while retaining the original sign, exponent, and mantissa information. Therefore, the meaning and structure of the data are not damaged, and only the storage unit is changed.

Also, when the float16 data is converted into int16 format, the bit pattern may be maintained as is. The converted int16 data may still have a bit structure of "0100011011000000", and the conversion may be a task of adjusting the format of the data to the format required by the encoder model 113. For example, when the encoder model 113 requires integer data (e.g., int16), the byte encoding module 111 may redefine the float16 data into int16 format without changing the bit pattern. No data loss may occur during this process.

For large amounts of data, the byte encoding module 111 may also divide the data by introducing additional dimensions. For example, when the attention data 520 is a float16 three-dimensional (3D) tensor with a size of 2 × 4096 × 1152, the data may be reconstructed to a size of 2 × 4096 × 1152 × 2 when each element is converted to a byte unit. The added dimension in this example may be intended for storing the upper 8 bits and lower 8 bits of each element. The added dimensions may be utilized to expand a storage unit while maintaining the bit pattern of the original data.

The byte encoding module 111 may maintain the bit structure of the attention data 520 and may simply convert the attention data 520 into a format that the encoder model may process or change the storage unit. For example, when a generation model uses the float16 format but the float16 format is not implemented in a particular framework, the byte encoding module 111 may convert the attention data 520 into a format that may be processed. Through the conversion process, the attention data 520 may have an input format suitable for the encoder model 113, and may then be converted into the compressed data 530 through a data alignment and compression process.

The data alignment module 112 according to one or more embodiments may determine a compression unit of the attention data 520 based on input data characteristics of a deep learning model. The data alignment module 112 may maximize data redundancy and increase compression efficiency by changing the compression unit. For example, since image data is composed of pixel data having strong spatial correlation, data within the same spatial area may be likely to have similar values. Accordingly, when the input data is image data, the data alignment module 112 may apply a compression unit utilizing spatial information. In another example, when a particular pixel value in an image tends to be similar to adjacent pixel values, utilizing this data structure may further improve compression efficiency. In another example, when the input data is video data, since temporal information plays an important role in video data, the data alignment module 112 may align the data in a direction of the time axis to reflect the temporal correlation.

The data alignment module 112 may analyze a structure of the attention data 520 generated in the transformer block and apply a compression unit using spatial information. When the attention data 520 generated in the transformer block is provided in the form of channel × image embedding × attention head output size, an existing compression unit may be the attention head output size. For example, when the attention data is in the form of 100 × 64 × 1152, the data may be grouped and compressed based on the attention head output size (e.g., 1152). This approach may be mainly suitable for language models, but for image data, there may be a high probability that there will be a lot of duplicate values in the spatial information direction. Therefore, the data alignment module 112 may determine a new compression unit based on the spatial information to increase compression efficiency.

For example, the data alignment module 112 may convert the attention data 520 into the form of channel × attention head output size × image height embedding size × image width embedding size. For example, when the original data has a 100 × 64 × 1152 structure, the data alignment module 112 may convert the original data into a 100 × 1152 × (8 × 8) format and compress the data by grouping the data based on the image height embedding size × image width embedding size (8 × 8).

The data alignment module 112 may also align data based on a predetermined dimension when there are many duplicate values in the predetermined dimension of the input data. To determine a dimension having many duplicate values, the data alignment module 112 may examine the entire input data, select and analyze representative samples by dimension, or use a scheme of calculating the amount of information for each dimension.

More specifically, the data alignment module 112 may directly examine all elements of the input data and calculate a frequency of the duplicate values for each dimension. For example, when the data is a 3D tensor in the form of channel × image height × image width, the data alignment module 112 may analyze the frequency with which the same values appear repeatedly in the image height and image width dimensions. When the image height dimension has the highest frequency of the duplicate values, the data may be aligned by this dimension. For example, when the data is a tensor of size 3 × 64 × 64 and most of the values in the image width dimension are the same, the data alignment module 112 may improve compression efficiency by aligning the data based on the image width.

In another example, the data alignment module 112 may analyze the duplicate values by selecting a representative sample in each dimension, rather than examining the entire input data. For example, when the data is a 4D tensor in the form of batch × channel × time × frequency, the data alignment module 112 may select only a portion of samples from each dimension and calculate the duplicate values. Typically, a scheme may be used to select only particular frames in a batch dimension or to analyze only data from a particular time period in a time dimension. This scheme may be useful for identifying dimensional characteristics while reducing the amount of computation required to analyze the entire data. For example, when the data of a 4D tensor has a size of 10 × 3 × 100 × 80, the data alignment module 112 may extract a first, middle, and last data in the time dimension and perform sampling analysis.

In another example, the data alignment module 112 may calculate the amount of information (e.g., entropy) in each dimension of the input data and select a dimension with many duplicate values. The amount of information may be a measure of the diversity of data, and a smaller value may indicate a dimension having more duplicate values and a higher possibility of compression. For example, when the data is an image tensor of size 2 × 128 × 128, the data alignment module 112 may calculate the entropy in each dimension and select the dimension with the most duplicate values. When the amount of information in a channel dimension is high and the amount of information in the image height and image width dimensions is low, the data alignment module 112 may align the image height and image width dimensions to use as compression units.

When the aligned data is greater in size than the input unit data of the encoder model 113, the data alignment module 112 may divide the aligned data patch-wise and compress the divided data. For example, when the aligned data is aligned as channel × attention head output size × image height embedding size × image width embedding size, the aligned data may be converted into the form of channel × attention head output size × (number of patches in vertical direction × number of patches in horizontal direction) × patch embedding height size × patch embedding width size. For example, when the data is aligned into 8 × 8 patch units in a spatial dimension, each patch may be used independently as a compression unit.

In this way, the data alignment module 112 may optimize the compression unit by considering the characteristics of the input data, thereby maximizing the compression efficiency and improving performance during the data processing process.

The encoder model 113 may be designed as a neural encoder based on an ANN and may convert the attention data 520 into the compressed data 530. The encoder model 113 may receive as input a converted data format, such as byte unit or integer data, and compress the received data. The encoder model 113 may learn the structural characteristics and redundancy of the data and may support efficient lossless compression.

The encoder model 113 may be applied to various types of neural network structures. For example, the encoder model 113 may be designed based on an autoencoder structure, and the autoencoder may be suitable for converting input data into a compressed representation. Additionally, the encoder model 113 may include a transformer-based encoder model or a recurrent neural network (RNN)-based encoder model.

The encoder model 113 of various structures may be selectively applied depending on the characteristics of the data and the required compression level. For example, when the encoder model 113 is designed based on an autoencoder structure, the input data may be converted into a compressed representation through an encoding layer of a neural network. A decoder of the autoencoder may have an inverse operation relationship with the encoder model 113 and may restore the compressed data 530 to the original attention data 520. Encoding by the encoder model 113 may be performed losslessly while maintaining the original bit pattern of the data.

The encoder model 113 may be custom designed according to particular compression requirements. For example, in the case of image data, compression efficiency may be maximized by learning the spatial or temporal characteristics of the input data. The encoder model that processes the image data may include a CNN-based structure, and for video data, a 3D CNN-based structure or a recurrent structure (e.g., RNN, LSTM, and the like) may be utilized.

Additionally, the encoder model 113 may be combined with a transformer-based model to effectively compress the characteristics of the attention data. For example, a self-attention mechanism of a transformer model may be used to learn long-range correlations in input data and reflect the learned correlations in a compression process.

To implement lossless compression, the encoder model 113 may be designed to maintain invertibility with a decoder model 123. By maintaining invertibility with the decoder model 123, the compressed data 530 may be restored to the original attention data 540 through the decoder 120.

Additional compression may be performed through the entropy encoding module 114 using schemes such as adaptive Huffman coding, arithmetic coding, and context-based adaptive binary arithmetic coding. The generated compressed data 530 may be stored in memory or transmitted to another system via data transmission. One or more embodiments may be implemented as a simplified structure for use in small devices or by omitting the entropy encoding and decoding processes as necessary to improve computational speed.

The decoder 120 according to one or more embodiments may include an entropy decoding module 124, the decoder model 123, a data alignment restoration module 122, and a byte decoding module 121. The decoder 120 may read the compressed data 530 and restore the compressed data 530 to its original data format, and each module may perform an inverse operation of the encoder to restore the attention data 540. For example, the decoder model 123 may restore compressed data from the encoder model 113, the data alignment restoration module 122 may realign the data into its original dimensions, and the byte decoding module 121 may convert the data into its original format. The restored attention data 540 may be used for operations in the attention layer N+1 550.

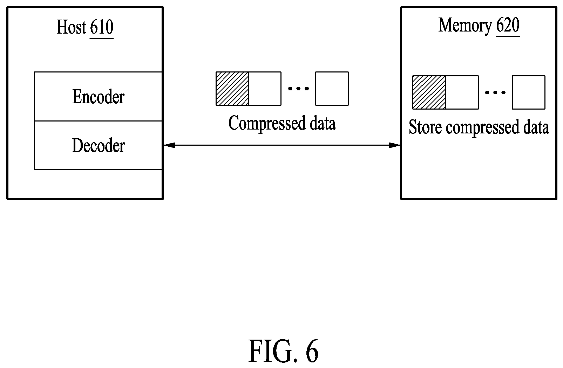

FIG. 6 is a diagram illustrating an example of an encoder and a decoder operating within a host according to one or more embodiments. The description provided with reference to FIGS. 1 to 5 may also apply to the description of FIG. 6.

A host 610 according to one or more embodiments may include a main operator such as a GPU or a CPU. Attention data or feature map data may be converted into compressed data by an encoder of the host 610 and stored in a memory 620. Afterwards, when necessary, the compressed data may be read from the memory 620 and the restored data may be reused through a decoder of the host 610.

Referring to FIG. 6, for example, when the attention data has a size of 100 × 64 × 1152, the encoder may compress this attention data to store in memory. The size of compressed data may become smaller than the size of original data, which may help reduce the amount of data transferred between the operator and memory. The decoder may restore the compressed data to regenerate the original bit patterns and data, and the restored data may be used for subsequent operations of a deep learning model.

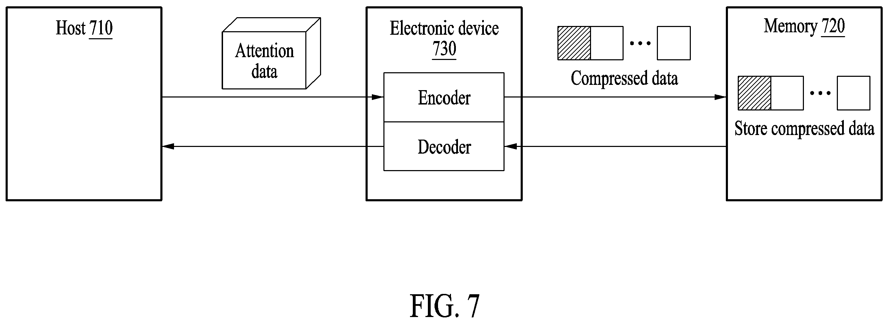

FIG. 7 is a diagram illustrating an example in which an encoder and a decoder are configured and used as a separate electronic device according to one or more embodiments. The description provided with reference to FIG. 1, FIG. 2, FIG. 3A, FIG. 3B, FIG. 4, FIG. 5, and FIG. 6 may also apply to the description of FIG. 7.

Referring to FIG. 7, an electronic device 730 according to one or more embodiments may perform a role of compressing and restoring data at an intermediate stage between a memory 720 and a host 710. The host 710 may perform operations, and the electronic device 730 may perform compression tasks to reduce the amount of data transmitted.

For example, when attention data generated from the host 710 is provided in float16 format, an encoder of the electronic device 730 may compress this attention data to store in the memory 720. The compressed data stored in memory may be restored through a decoder of the electronic device 730, and the restored data may be transmitted back to the host 710 and used for subsequent operations.

Additionally, in this structure, the communication efficiency between the host 710 and the electronic device 730 may have to be greater than the communication efficiency between the memory 720 and the electronic device 730. This may allow the data transmission speed between the host 710 and the memory 720 to be optimized.

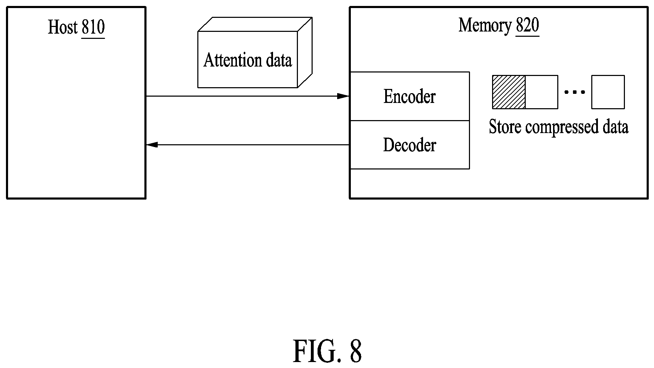

FIG. 8 is a diagram illustrating an example of an encoder and a decoder operating within a memory according to one or more embodiments. The description provided with reference to FIG. 1, FIG. 2, FIG. 3A, FIG. 3B, FIG. 4, FIG. 5, FIG. 6, and FIG. 7 may also apply to the description of FIG. 8.

Referring to FIG. 8, a memory 820 according to one or more embodiments may include an encoder and a decoder by itself, and may perform the tasks of compressing data before storing the data and restoring the data when loading the data.

For example, when attention data generated from a host 810 is a tensor having a size of 2 × 4096 × 1152, the memory 820 may compress this attention data to save storage space. The stored compressed data may be restored through a decoder in the memory 820 and transmitted to the host 810 when necessary.

The structure in which the encoder and decoder operate within the memory 820 may be usefully applied in an environment where memory capacity is limited. For example, when a large amount of attention data has to be stored within limited memory, a compression function within the memory may be utilized to efficiently manage storage capacity. However, the structure in which the encoder and decoder operate within the memory 820 may not have a significant effect on the data transmission efficiency between the host 810 and the memory 820.

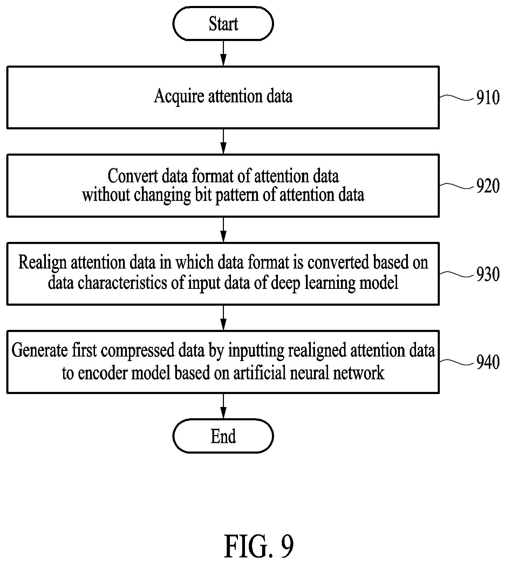

FIG. 9 is a flowchart illustrating a compression method according to one or more embodiments. The description provided with reference to FIG. 1, FIG. 2, FIG. 3A, FIG. 3B, FIG. 4, FIG. 5, FIG. 6, FIG. 7, and FIG. 8 may also apply to the description of FIG. 9.

For ease of description, it is described that operation 910, operation 920, operation 930, and operation 940 are performed by the encoder 110 shown in FIG. 1. However, operation 910, operation 920, operation 930, and operation 940 may be performed by any suitable electronic device and in any suitable system.

Furthermore, the operations of FIG. 9 may be performed in the shown order and manner. However, the order of some operations may be changed, or some operations may be omitted, without departing from the scope of the shown embodiment. The operations shown in FIG. 9 may be performed in parallel or simultaneously.

In operation 910, the encoder 110 according to one or more embodiments may acquire attention data generated in a layer of a deep learning model based on an attention mechanism. The deep learning model may include a transformer model, and the attention data may include output data of a multi-head self-attention layer, a multi-head cross attention layer, or a feedforward network of the transformer model.

In operation 920, the encoder 110 according to one or more embodiments may convert a data format of the attention data without changing a bit pattern of the attention data. The encoder 110 may convert the data format of the attention data into the same format as required by an encoder model. For example, the encoder 110 may convert the data format of the attention data into byte units or integer data.

In operation 930, the encoder 110 according to one or more embodiments may realign the attention data in which the data format is converted based on the data characteristics of input data of the deep learning model. The encoder 110 may determine a compression unit of the attention data in which the data format is converted based on the data characteristics of the input data of the deep learning model, and realign the attention data in which the data format is converted according to the compression unit.

For example, when the input data of the deep learning model is image data, the encoder 110 may realign the attention data in which the data format is converted based on spatial information on a relationship between pixels of the image data. When the input data of the deep learning model is video data, the encoder 110 may realign the attention data in which the data format is converted based on temporal information on a relationship between frames of the video data.

In operation 940, the encoder 110 according to one or more embodiments may generate first compressed data by inputting the realigned attention data to an encoder model based on an ANN. The encoder 110 may store the first compressed data in memory. The encoder 110 may perform entropy encoding on the first compressed data to generate second compressed data. The encoder 110 may store the second compressed data in memory.

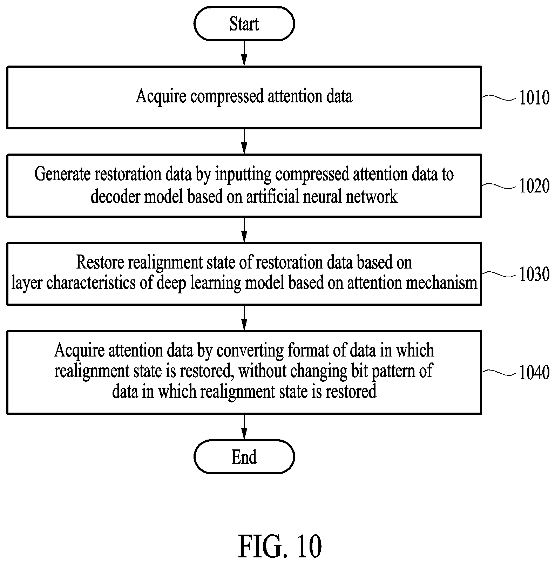

FIG. 10 is a flowchart illustrating a restoration method according to one or more embodiments. The description provided with reference to FIG. 1, FIG. 2, FIG. 3A, FIG. 3B, FIG. 4, FIG. 5, FIG. 6, FIG. 7, FIG. 8, and FIG. 9 may also apply to the description of FIG. 10.

For ease of description, it is described that operation 1010, operation 1020, operation 1030, and operation 1040 are performed by the decoder 120 shown in FIG. 1. However, operation 1010, operation 1020, operation 1030, and operation 1040may be performed by any suitable electronic device and in any suitable system.

Furthermore, the operations of FIG. 10 may be performed in the shown order and manner. However, the order of some operations may be changed, or some operations may be omitted, without departing from the scope of the shown embodiment. The operations shown in FIG. 10 may be performed in parallel or simultaneously.

In operation 1010, the decoder 120 according to one or more embodiments may obtain compressed attention data from a memory. The compressed attention data may be data previously compressed and stored in an encoder.

In operation 1020, the decoder 120 according to one or more embodiments may generate restored data by inputting the compressed attention data to a decoder model based on an ANN.

The data restored from the decoder model may have the same form as the attention data aligned in the data alignment module of the encoder. For example, when the original data is in the form of channel × image embedding × attention head output size, and the encoder aligns the original data in the form of channel × attention head output size × image height embedding size × image width embedding size, the data restored by the decoder model may also have to maintain the same form of channel × attention head output size × image height embedding size × image width embedding size.

The structure of the restored data may directly reflect an aligned state in the encoder, which may be an important factor for the decoder to correctly restore the semantic structure and realignment state of the original data.

In operation 1030, the decoder 120 according to one or more embodiments may restore a realignment state of the restored data based on the layer characteristics of a deep learning model based on an attention mechanism. For example, when the attention data in the encoder is aligned in the form of channel × image embedding × attention head output size to channel × attention head output size × image height embedding size × image width embedding size, the decoder 120 may reconstruct the data so that the restored data may have the same alignment state.

In operation 1040, the decoder 120 according to one or more embodiments may acquire the attention data by converting a format of the data in which the realignment state is restored without changing a bit pattern of the data in which the realignment state is restored. Since the bit structure of the data is not changed during the conversion stage of the original encoder, the decoder may perform format conversion while maintaining the same bit structure. For example, when the data in which the realignment state is restored exists in byte format, the data may be converted to float16 format to restore the data structure originally used in the attention mechanism.

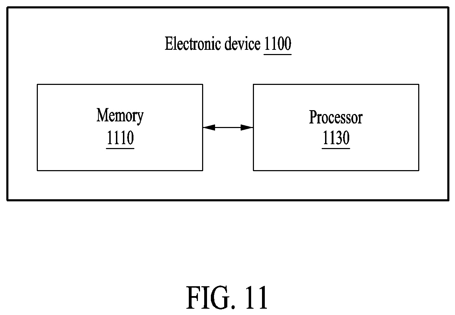

FIG. 11 is a diagram illustrating an electronic device according to one or more embodiments. The description provided with reference to FIG. 1, FIG. 2, FIG. 3A, FIG. 3B, FIG. 4, FIG. 5, FIG. 6, FIG. 7, FIG. 8, FIG. 9, and FIG. 10 may substantially, identically apply to FIG. 11.

Referring to FIG. 11, an electronic device 1100 may include a memory 1110 and a processor 1130. The electronic device 1100 according to one or more embodiments may include the encoder 110 described with reference to FIG. 1, FIG. 2, FIG. 3A, FIG. 3B, FIG. 4, FIG. 5, FIG. 6, FIG. 7, FIG. 8, FIG. 9, and FIG. 10.

The memory 1110 may store instructions (e.g., programs) executable by the processor 1130. For example, the instructions may include instructions for executing an operation of the processor 1130 and/or an operation of each component of the processor 1130.

The memory 1110 may be implemented as a volatile memory device or a non-volatile memory device.

The volatile memory device may be implemented as DRAM, SRAM, thyristor RAM (T-RAM), zero capacitor RAM (Z-RAM), or twin transistor RAM (TTRAM).

The non-volatile memory device may be implemented as electrically erasable programmable read-only memory (EEPROM), flash memory, magnetic RAM (MRAM), spin-transfer torque (STT)-MRAM, conductive bridging RAM (CBRAM), ferroelectric RAM (FeRAM), phase-change RAM (PRAM), resistive RAM (RRAM), nanotube RRAM, polymer RAM (PoRAM), nano floating gate memory (NFGM), holographic memory, a molecular electronic memory device, or insulator resistance change memory.

The processor 1130 may process data stored in the memory 1110. The processor 1130 may execute computer-readable code (e.g., software) stored in the memory 1110 and instructions triggered by the processor 1130.

The processor 1130 may be a data processing device implemented as hardware including a circuit having a physical structure to execute desired operations. The desired operations may include, for example, code or instructions in a program.

The hardware-implemented data processing device may include, for example, a microprocessor, a CPU, a processor core, a multi-core processor, a multiprocessor, an ASIC, and an FPGA.

The processor 1130 may acquire attention data generated in a layer of a deep learning model based on an attention mechanism, convert a data format of the attention data without changing a bit pattern of the attention data, realign the attention data in which the data format is converted based on data characteristics of input data of the deep learning model, and generate first compressed data by inputting the realigned attention data into an encoder model based on an ANN. The processor 1130 may perform operations of the encoder described with reference to FIGS. 1 to 10 in substantially the same manner. Accordingly, a detailed description thereof is omitted herein.

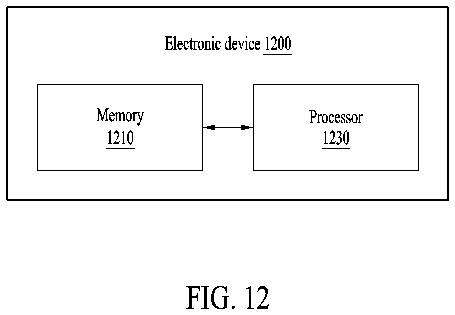

FIG. 12 is a diagram illustrating an electronic device according to one or more embodiments. The description provided with reference to FIG. 1, FIG. 2, FIG. 3A, FIG. 3B, FIG. 4, FIG. 5, FIG. 6, FIG. 7, FIG. 8, FIG. 9, FIG. 10, and FIG. 11 may substantially, identically apply to FIG. 12.

Referring to FIG. 12, an electronic device 1200 may include a memory 1210 and a processor 1230. The electronic device 1200 according to one or more embodiments may include the decoder 120 described with reference to FIG. 1, FIG. 2, FIG. 3A, FIG. 3B, FIG. 4, FIG. 5, FIG. 6, FIG. 7, FIG. 8, FIG. 9 and FIG. 10.

The memory 1210 may store instructions (e.g., programs) executable by the processor 1230. For example, the instructions may include instructions for executing an operation of the processor 1230 and/or an operation of each component of the processor 1230.

The memory 1210 may be implemented as a volatile memory device or a non-volatile memory device.

The volatile memory device may be implemented as DRAM, SRAM, thyristor RAM (T-RAM), zero capacitor RAM (Z-RAM), or twin transistor RAM (TTRAM).

The non-volatile memory device may be implemented as EEPROM, flash memory, MRAM, STT-MRAM, CBRAM, FeRAM, PRAM, RRAM, nanotube RRAM, PoRAM, NFGM, holographic memory, a molecular electronic memory device, or insulator resistance change memory.

The processor 1230 may process data stored in the memory 1210. The processor 1230 may execute computer-readable code (e.g., software) stored in the memory 1210 and instructions triggered by the processor 1230.

The processor 1230 may be a data processing apparatus implemented by hardware including a circuit having a physical structure to perform desired operations. The desired operations may include, for example, code or instructions in a program.

The hardware-implemented data processing device may include, for example, a microprocessor, a CPU, a processor core, a multi-core processor, a multiprocessor, an ASIC, and an FPGA.

The processor 1230 may acquire compressed attention data from a memory, generate restored data by inputting the compressed attention data to a decoder model based on an ANN, restore a realignment state of the restored data based on layer characteristics of a deep learning model based on an attention mechanism, and acquire attention data by converting a format of the data in which the realignment state is restored, without changing a bit pattern of the data in which the realignment state is restored. The processor 1230 may perform operations of the decoder described with reference to FIG. 1, FIG. 2, FIG. 3A, FIG. 3B, FIG. 4, FIG. 5, FIG. 6, FIG. 7, FIG. 8, FIG. 9, FIG. 10, and FIG. 11 in substantially the same manner. Accordingly, a detailed description thereof is omitted herein.

The embodiments described herein may be implemented using a hardware component, a software component and/or a combination thereof. A processing device may be implemented using one or more general-purpose or special-purpose computers, such as, for example, a processor, a controller, an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is singular; however, one of ordinary skill in the art will appreciate that a processing device may include multiple processing elements and multiple types of processing elements. For example, a processing device may include a plurality of processors or a processor and a controller. In addition, different processing configurations are possible, such as parallel processors.

The software may include a computer program, a piece of code, an instruction, or combinations thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

An amount of data transmission between GPU operators may be reduced by compressing data using a general compression method accelerated in the GPU operator. However, when a compression method is targeting general data, there is an issue that the compression efficiency may be low when applied to a feature map or activation of an ANN model. In the case of general compression methods, the type of data to be compressed is not specified, and methods that may be generally used are targeted. However, the data mainly used in developing actual compression methods is limited to text data, image data, texture data, and the like, and it is often efficient only when the type of data is integer data, so the practical benefit of know compression method may be low when applied to feature maps or activation data of ANNs.

In another method memory storage capacity may be reduced by compressing activation data. However, since the same lossy compression method is used for all activation data, there is an issue that when applied to a model using image data, the compression efficiency may be poor because the characteristics of the image data are not considered, or when the compression efficiency is increased, important image data may be omitted. This may cause problems such as slow learning speed or failure to reach optimal learning results when an ANN model is trained, and performance degradation may occur when inference is performed on an ANN model that has completed training.

According to embodiments of the present disclosure a method of realigning an attention feature map or attention activation generated in an inference step of an ANN having a transformer-based structure by reflecting image characteristics, and then compressing the realigned attention data using an ANN model, thereby securing a high compression ratio without loss compared to conventional general compression methods is provided. When embodiments of the present disclosure are applied, the attention data calculated in the operation host may not be read and written directly to the memory, but may be first compressed, written, read, and then restored.

While the embodiments are described with reference to drawings, it will be apparent to one of ordinary skill in the art that various alterations and modifications in form and details may be made in these embodiments without departing from the scope of the claims. For example, suitable results may be achieved if the described techniques are performed in a different order, and/or if components in a described system, structure, device, or circuit are combined in a different manner, and/or replaced or supplemented by other components.

Therefore, other implementations and other embodiments are also within the scope of the following claims.

## Claims

1. A compression method implemented by at least one hardware processor, comprising:
acquiring attention data generated in a layer of a deep learning model based on an attention mechanism;
converting a data format of the attention data into a converted data format, wherein a bit pattern of the attention data is maintained in converting the data format of the attention data into the converted data format;
realigning, based on data characteristics of input data of the deep learning model, the attention data in the converted data format; and
generating first compressed data by inputting the realigned attention data to an encoder model based on an artificial neural network.

2. The compression method of claim 1, wherein converting the data format of the attention data into the converted data format comprises converting the data format of the attention data into a same format as a format predetermined as required by the encoder model.

3. The compression method of claim 1 or 2, wherein converting the data format of the attention data into the converted data format comprises:
converting the data format of the attention data into any of byte units and integer data, and/or
determining, based on the data characteristics of the input data of the deep learning model, a compression unit of the attention data in which the data format is converted; and
realigning, according to the compression unit, the attention data in the converted data format, and/or
in response to the input data of the deep learning model being determined as image data, realigning, based on spatial information on a relationship between pixels of the image data, the attention data in the converted data format, and/or
in response to the input data of the deep learning model being determined as video data, realigning, based on temporal information on a relationship between frames of the video data, the attention data in the converted data format.

4. The compression method of any of the preceding claims, wherein the deep learning model comprises a transformer model, and
acquiring the attention data comprises acquiring output data of any of a multi-head self-attention layer, a multi-head cross attention layer, and a feedforward network of the transformer model.

5. The compression method of any of the preceding claims, further comprising:
generating second compressed data by performing entropy encoding on the first compressed data.

6. The compression method of any of the preceding claims, further comprising:
storing the first compressed data in a memory.

7. A restoration method, comprising:
acquiring compressed attention data from a memory;
generating restored data by inputting the compressed attention data to a decoder model based on an artificial neural network;
restoring a realignment state of the restored data based on layer characteristics of a deep learning model based on an attention mechanism; and
acquiring attention data by converting a format of the restored data, in which the realignment state is restored, into a converted format in which a bit pattern of the attention data is maintained in converting the format into the converted format in which the realignment state is restored.

8. An electronic device, comprising:
at least one processor including processing circuitry; and
a memory storing instructions,
wherein the instructions, when executed by the at least one processor, cause the electronic device to:
acquire attention data generated in a layer of a deep learning model based on an attention mechanism;
convert a data format of the attention data into a converted data format, wherein a bit pattern of the attention data is maintained in converting the data format of the attention data into the converted data format;
realign, based on data characteristics of input data of the deep learning model, the attention data in which the data format is converted; and
generate first compressed data by inputting the realigned attention data to an encoder model based on an artificial neural network.

9. The electronic device of claim 8, wherein the instructions, when executed by the at least one processor, cause the electronic device to:
convert the data format of the attention data into a same format as a format predetermined as required by the encoder model.

10. The electronic device of claim 8 or 9, wherein converting the data format of the attention data into the converted data format comprises converting the data format of the attention data into any of byte units and integer data.

11. The electronic device of any of claims 8-10, wherein the instructions, when executed by the at least one processor, cause the electronic device to:
determine, based on the data characteristics of the input data of the deep learning model, a compression unit of the attention data in which the data format is converted; and
realign, according to the compression unit, the attention data in the converted data format, and/or
in response to the input data of the deep learning model being determined as image data, realign, based on spatial information on a relationship between pixels of the image data, the attention data in the converted data format, and/or
in response to the input data of the deep learning model being determined as video data, realign, based on temporal information on a relationship between frames of the video data, the attention data in the converted data format.

12. The electronic device of any of claims 8-11, wherein the deep learning model comprises a transformer model, and
wherein the instructions, when executed by the at least one processor, cause the electronic device to:
acquire output data of any of a multi-head self-attention layer, a multi-head cross attention layer, and a feedforward network of the transformer model.

13. The electronic device of any of claims 8-12, wherein the instructions, when executed by the at least one processor, cause the electronic device to:
generate second compressed data by performing entropy encoding on the first compressed data.

14. The electronic device of any of claims 8-13, wherein the instructions, when executed by the at least one processor, cause the electronic device to:
store the first compressed data in a memory.

15. The electronic device of any of claims 8-14, wherein the instructions, when executed by the at least one processor, cause the electronic device to:
generate restored data by inputting the first compressed data to a decoder model based on an artificial neural network;
restore a realignment state of the restored data based on layer characteristics of the deep learning model; and
acquire attention data by converting a format of the restored data, in which the realignment state is restored, into a converted format in which the bit pattern of the attention data is maintained in converting the format into the converted format.
